# EUROPEAN PATENT SPECIFICATION

(11) **EP 3 929 487 B1**
(45) Date of publication and mention of the grant of the patent: **07.08.2024**
(21) Application number: 20182242.6
(22) Date of filing: 25.06.2020
(51) Int. Cl.: F23R 3/00, F02C 7/264

(54) **COMBUSTOR ASSEMBLY FOR A GAS TURBINE ENGINE**
BRENNERANORDNUNG FÜR EINEN GASTURBINENMOTOR
ENSEMBLE CHAMBRE DE COMBUSTION POUR MOTEUR DE TURBINE À GAZ

(43) Date of publication of application: 29.12.2021
(73) Proprietor: General Electric Company, Schenectady, NY 12345 (US); GE Avio S.r.l., 10040 Rivalta di Torino (TO) (IT)
(72) Inventor: GIAMBRA, Massimo Giovanni, 10040 Rivalta di Torino (IT); HALL, Orin, Schenectady, New York 12345 (US); JACOBSON, John Carl, Schenectady, New York 12345 (US)
(74) Representative: Openshaw & Co.

(56) References cited:
- EP-A1- 3 018 418
- EP-A1- 3 628 927
- EP-A1- 3 643 968
- EP-A2- 1 424 469
- FR-A1- 2 988 436
- US-A1- 2020 284 432

## Description

### FIELD OF THE INVENTION

The present subject matter relates generally to a gas turbine engine, or more particularly to a combustor assembly of a gas turbine engine.

### BACKGROUND OF THE INVENTION

A gas turbine engine generally includes a fan and a core arranged in flow communication with one another. Additionally, the core of the gas turbine engine general includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gases through the turbine section drives the turbine section and is then routed through the exhaust section, e.g., to atmosphere.

Certain conventional combustor assemblies include double wall combustor liners having an inner wall and an outer wall. One or more igniters are inserted through openings defined in the combustor walls for igniting a fuel/air mixture in the combustion chamber to support combustion. During operation, thermal expansion causes the igniters and the combustor liners to move relative to each other. To accommodate such movement, conventional igniter mounting assemblies include a boss and a stop ring that are welded around the openings in the inner wall and the outer wall, respectively. A ferrule sits on the boss and passes through the outer wall opening for receiving an igniter that passes into the combustion chamber. However, such igniter mounting assemblies utilize a complicated structure resulting in more parts, more complicated assembly, increased costs, and decreased reliability.

Accordingly, a gas turbine engine with an improved igniter mounting assembly would be useful. More specifically, an igniter mounting assembly for a double wall combustor that improves performance and simplifies manufacturing and assembly would be particularly beneficial.

EP 1 424 469 A2 concerns a seal arrangement for a combustor. The seal arrangement comprises a seal defining a first aperture, an inner combustor wall defining a second aperture, and an outer combustor wall defining a third aperture. The first and second apertures are arranged in line with each other to receive an article therethrough. The seal is arranged between the inner and outer combustor walls.

### BRIEF DESCRIPTION OF THE INVENTION

Aspects and advantages of the invention will be set forth in part in the following description, or may be obvious from the description, or may be learned through practice of the invention.

In one exemplary embodiment of the present disclosure, a combustor assembly for a gas turbine engine as defined in claim 1 is provided. In addition, the outer wall and the stop ring may be integrally formed as a single monolithic component.

According to some embodiments, the ferrule further defines a flared portion, the flared portion extending away from the body along the radial direction at an opposite end from the radial flange.

According to exemplary aspects, the radial flange is slidably received within the gap such that the ferrule may slide along the radial direction. In addition, the outer line may be an outer liner of the combustor assembly.

In another aspect, the combustor assembly includes an igniter extending through the central bore of the ferrule and including a distal end positioned proximate the inner opening of the inner wall.

The inner wall may include a plurality of layers formed by depositing a layer of additive material on a bed of an additive manufacturing machine and selectively directing energy from an energy source onto the layer of additive material to fuse a portion of the additive material.

Aspects of the present disclosure also provide a method of manufacturing a combustor assembly for a gas turbine as defined in claim 9.

According to another aspect, the body of the ferrule defines a central bore in fluid communication with a combustion chamber, and the method further includes inserting an igniter through the central bore of the ferrule, the igniter including a distal end positioned proximate the inner opening of the inner wall.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a schematic cross-sectional view of an exemplary gas turbine engine according to various embodiments of the present subject matter.
FIG. 2 is a perspective, cross-sectional view of a combustion section of the exemplary gas turbine engine of FIG. 1 in accordance with an exemplary embodiment of the present disclosure.
FIG. 3 is a perspective, cross-sectional view of a combustor and igniter mounting assembly of the exemplary gas turbine engine of FIG. 1 in accordance with an exemplary embodiment of the present disclosure.
FIG. 4 is a close-up, cross-sectional view of the exemplary igniter mounting assembly of FIG. 3 according to an exemplary embodiment of the present subject matter.
FIG. 5 is a side, cross-sectional view of the exemplary igniter mounting assembly of FIG. 3 according to another exemplary embodiment of the present subject matter.
FIG. 6 is a method for manufacturing a combustor assembly of a gas turbine engine according to an embodiment of the present subject matter.

Repeat use of reference characters in the present specification and drawings is intended to represent the same or analogous features or elements of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "forward" and "aft" refer to relative positions within a gas turbine engine, with forward referring to a position closer to an engine inlet and aft referring to a position closer to an engine nozzle or exhaust. The terms "upstream" and "downstream" refer to the relative direction with respect to fluid flow in a fluid pathway. For example, "upstream" refers to the direction from which the fluid flows, and "downstream" refers to the direction to which the fluid flows. Furthermore, as used herein, terms of approximation, such as "approximately," "substantially," or "about," refer to being within a ten percent margin of error.

The present disclosure is generally directed to a combustor assembly for a gas turbine engine. The combustor assembly generally includes a liner at least partially defining a combustion chamber and having an inner wall defining an inner opening and an outer wall defining an outer opening. A boss is defined by the inner wall and extends around the inner opening toward the outer wall. A body of a ferrule extends along an axial direction through the outer opening and defines a central bore in fluid communication with the combustion chamber. A radial flange extends from the body along a radial direction and is positioned between the inner wall and the outer wall. The flange defines a flange diameter that is greater than an internal diameter of the outer opening such that the ferrule may slide along the radial direction but is restrained in the axial direction.

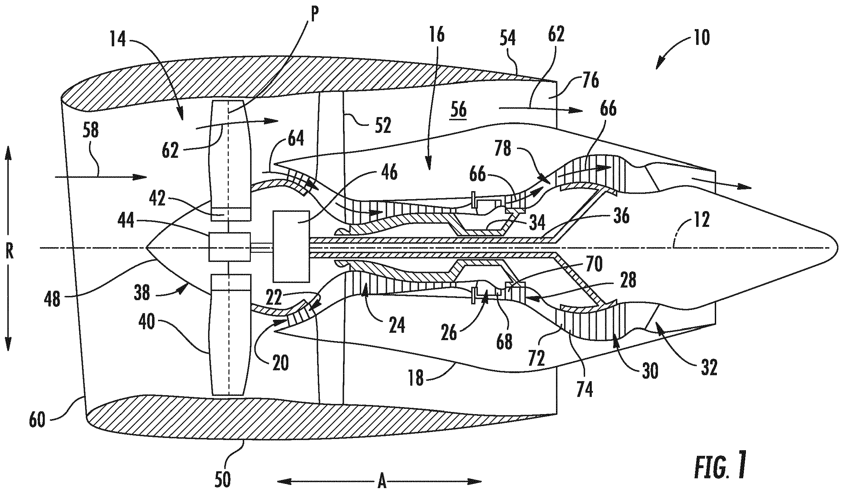

Referring now to the drawings, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline or central axis 12 provided for reference) and a radial direction R. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustor or combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across a power gear box 46. The power gear box 46 includes a plurality of gears for stepping down the rotational speed of the LP shaft 36 to a more efficient rotational fan speed.

Referring still to the exemplary embodiment of FIG. 1, the disk 42 is covered by rotatable front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

It should be appreciated that the exemplary turbofan 10 depicted in FIG. 1 is by way of example only and that in other exemplary embodiments, turbofan 10 may have any other suitable configuration. For example, it should be appreciated that in other exemplary embodiments, turbofan 10 may instead be configured as any other suitable turbine engine, such as a turboprop engine, turbojet engine, internal combustion engine, etc.

In general, the various components of turbofan 10 described herein may be manufactured or formed using any suitable process. However, in accordance with several aspects of the present subject matter, at least some components of turbofan 10 may be formed using an additive-manufacturing process, such as a 3-D printing process. The use of such a process may allow such components to be formed integrally, as a single monolithic component, or as any suitable number of sub-components. In particular, the manufacturing process may allow components to be integrally formed and include a variety of features not possible when using prior manufacturing methods. For example, the additive manufacturing methods described herein enable the manufacture of components having various features, configurations, thicknesses, materials, densities, fluid passageways, and mounting structures not possible using prior manufacturing methods. Some of these novel features are described herein.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The plurality of successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as need depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique, complex structures and performance enhancing features. In addition, the additive manufacturing process enables the manufacture of a single component having different materials such that different portions of the component may exhibit different performance characteristics. The successive, additive nature of the manufacturing process enables the construction of these novel features.

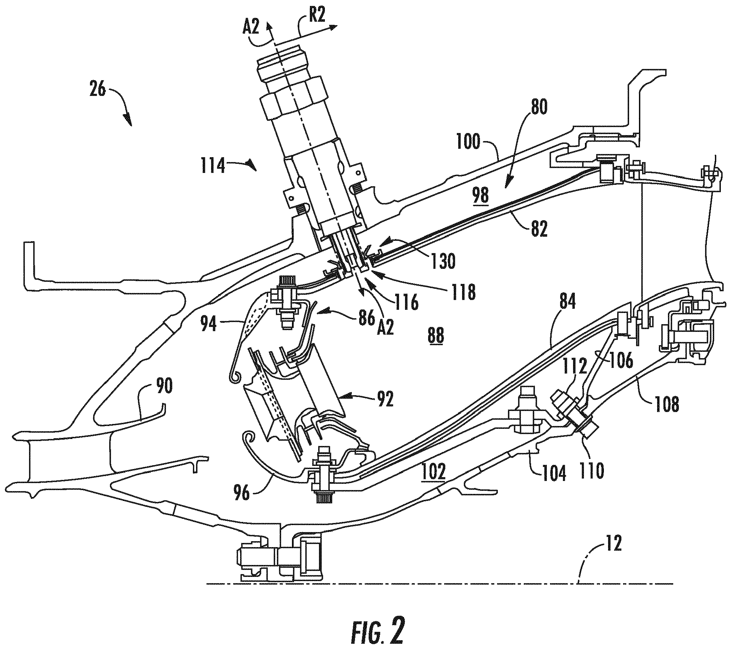

Referring now to FIG. 2, a schematic, cross-sectional view of the combustion section 26 of the exemplary turbofan engine 10 of FIG. 1 is provided. The combustion section 26 generally includes a combustor assembly 80 that generates the combustion gases discharged into the turbine section, or more particularly, into the HP turbine 28. It should be appreciated that combustor assembly 80 is an exemplary combustor used to explain aspects of the present subject matter. According to alternative embodiments, combustion section 26 may include other combustor types and configurations, e.g., a reverse flow combustor.

As is depicted, the combustor assembly 80 includes an outer liner 82, an inner liner 84, and a dome 86-the outer liner 82, inner liner 84, and dome 86 together defining a combustion chamber 88. Additionally, a diffuser 90 is positioned upstream of the combustion chamber 88. The diffuser 90 receives an airflow from the compressor section and provides such flow of compressed air to the combustor assembly 80. More particularly, for the embodiment depicted the diffuser 90 provides the flow of compressed air to a single circumferential row of fuel/air mixers 92. Accordingly, the exemplary combustor dome 86 depicted is configured as a single annular dome, and the circumferential row of fuel/air mixers 92 are provided within openings formed in such dome 86. However, in other embodiments, a multiple annular dome may be utilized.

A fuel nozzle (not shown) provides fuel to fuel/air mixers 92 in accordance with a desired performance of the combustor assembly 80 at various engine operating states. It will also be noted that for the embodiment depicted, an outer annular cowl 94 and an inner annular cowl 96 are located upstream of the combustion chamber 88 so as to direct air flow into fuel/air mixers 92. The outer and inner annular cowls 94, 96 may also direct a portion of the flow of air from the diffuser 90 to an outer passage 98 defined between the outer liner 82 and an outer casing 100 and an inner passage 102 defined between the inner liner 84 and an inner casing 104. Additionally for the embodiment depicted, an inner support cone 106 is further shown as being connected to a nozzle support 108 by means of a plurality of bolts 110 and nuts 112. However, other exemplary combustion sections may include any other suitable structural configuration.

Referring still to FIG. 2, an igniter 114 is provided so as to ignite the fuel/air mixture supplied to combustion chamber 88. The exemplary igniter 114 depicted is attached to outer casing 100 of combustor assembly 80 in a substantially fixed manner. As illustrated, igniter 114 includes a distal end 116 that extends through an opening 118 defined in outer liner 82 and into combustion chamber 88. It should be appreciated that according to alternative embodiments, igniter 114 may extend through inner liner 84 or through any other suitable aperture into combustion chamber 88. In addition, distal end 116 of igniter 114 may be positioned entirely within combustion chamber 88 or may extend to a position flush with outer liner 82, e.g., such that distal end 116 is positioned proximate to opening 118.

It will be appreciated that certain components of the combustor assembly 80, such as the outer and inner liner 82, 84, may be formed of a Ceramic Matrix Composite (CMC), which is a non-metallic material having high temperature capability. Exemplary composite materials utilized for such liners include silicon carbide, silicon, silica or alumina matrix materials and combinations thereof. Typically, ceramic fibers are embedded within the matrix such as oxidation stable reinforcing fibers including monofilaments like sapphire and silicon carbide, as well as rovings and yarn including silicon carbide, alumina silicates, and chopped whiskers and fibers, and optionally ceramic particles (e.g., oxides of Si, Al, Zr, Y and combinations thereof) and inorganic fillers (e.g., pyrophyllite, wollastonite, mica, talc, kyanite and montmorillonite). CMC materials may have coefficients of thermal expansion in the range of about 2.3×10-6 m/m/° C (1.3×10-6 in/in/° F.) to about 6.3×10-6 m/m/° C (3.5×10-6 in/in/° F.) in a temperature range of approximately 540-650° C (1000-1200° F).

By contrast, other components of the combustor assembly 80/combustion section 26, such as the outer casing 100, inner casing 104, and other support members of the combustion section 26, may be formed of a metal, such as a nickel-based superalloy (which may have a coefficient of thermal expansion of about 14.9×10-6 m/m/° C (8.3-8.6×10-6 in/in/° F.) in a temperature range of approximately 540-650° C (1000-1200° F.)) or cobalt-based superalloy (which may have a coefficient of thermal expansion of about 16.6-16.9×10-6 m/m/° C (9.2-9.4×10-6 in/in/° F.)). Thus, although outer and inner liners 82, 84 may be better able to handle the extreme temperature environment presented in combustion chamber 88, such components may expand differently from the metal components of the combustion section due to the mismatched coefficients of thermal expansion.

Notably, given the differing materials forming the outer liner 82 of the combustor assembly 80 and the outer casing 100 of the combustor assembly 80, the distal end 116 of the igniter 114 may need to be movable relative to the outer liner 82 of the combustor assembly 80. More specifically, because the components are attached to different portions of turbofan 10, are constructed of materials having different coefficients of thermal expansion, and are exposed to different temperatures, thermal expansion can cause significant relative movement between the outer liner 82 and igniter 114. Accordingly, combustor assembly 80 further includes an igniter mounting assembly 130 for mounting igniter 114 to outer liner 82 while allowing some relative movement between the igniter 114 to outer liner 82 to accommodate for thermal growth mismatch.

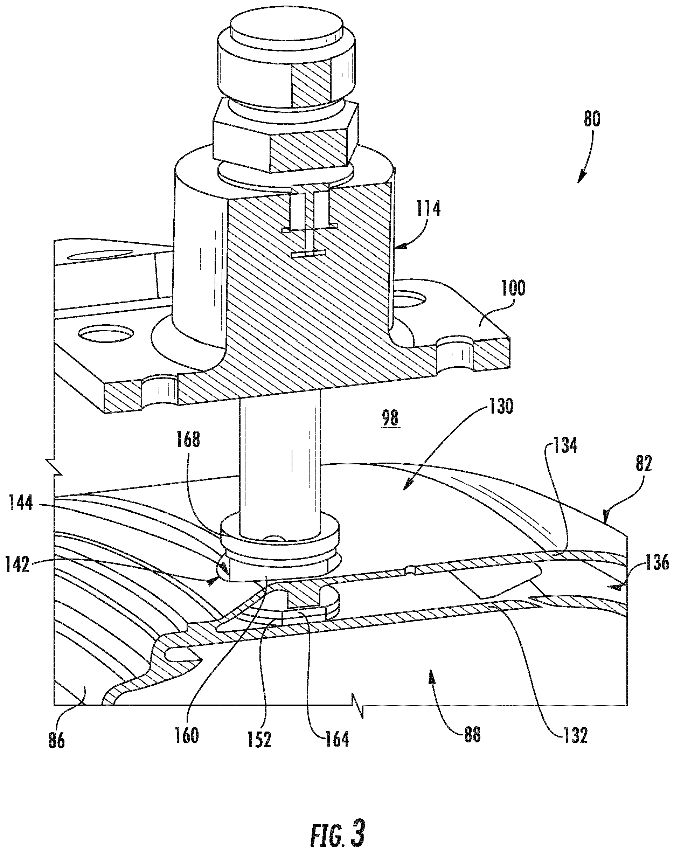

Referring now also to FIGS. 3 through 5, several close-up, cross-sectional views are provided of the exemplary igniter 114, igniter mounting assembly 130, and outer liner 82 of combustor assembly 80 depicted in FIG. 2. As illustrated, outer liner 82 is a double wall combustor liner, including an inner wall 132 and an outer wall 134 spaced apart to define a gap 136 between inner wall 132 and outer wall 134. Gap 136 may generally be sized and configured for distributing compressed air for cooling inner wall 132 of outer liner 82. In this regard, for example, inner wall 132 and outer wall 134 may define a plurality of cooling holes (not shown). Compressed air from outer passage 98 may pass through the cooling holes, e.g., to provide impingement and/or film cooling of inner wall 132.

As explained above, igniter 114 passes through opening 118 in outer liner 82. More specifically, according to the illustrated embodiment, inner wall 132 defines an inner opening 140 and outer wall 134 defines an outer opening 142, which collectively define opening 118. Igniter mounting assembly 130 further includes a ferrule 144 that is positioned within or adjacent to opening 118 and is generally configured for receiving igniter 114. According to the illustrated embodiment, ferrule 144 defines an axial direction A2 and a radial direction R2 perpendicular to the axial direction A2.

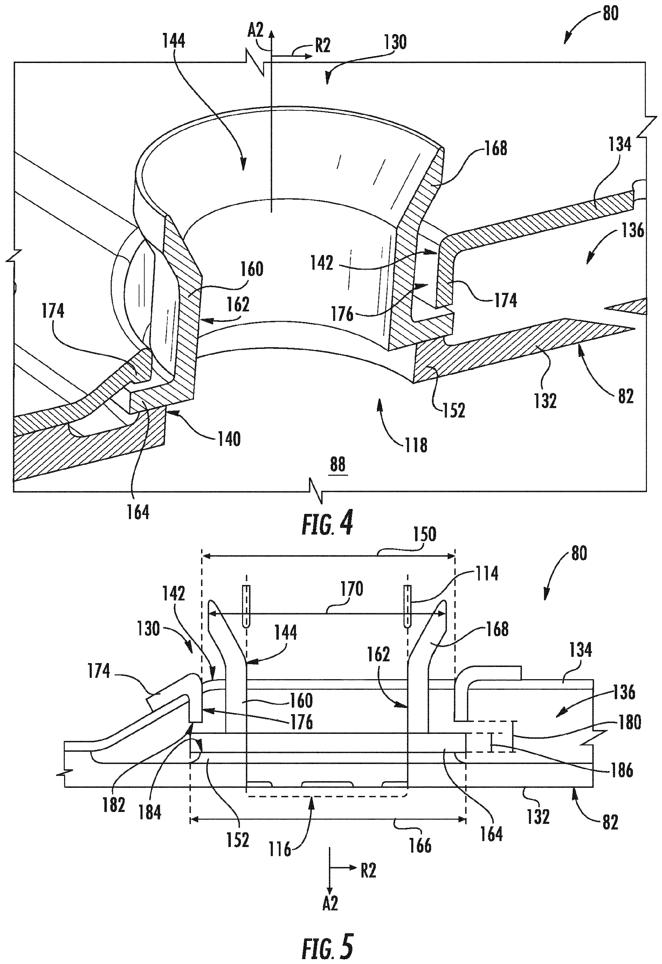

According to the illustrated embodiment, outer opening 142 is substantially concentric with inner opening 140 and defines an internal diameter 150. In addition, inner wall 132 defines a boss 152 that extends around inner opening 140 and toward outer wall 134 or into gap 136. Boss 152 is generally configured for providing a low friction surface on which ferrule 144 may be seated. Conventional igniter assemblies included separate bosses that had to be welded to the inner wall of the combustor liner, resulting in additional parts and more complicated assembly. In addition, such a construction required the boss have a larger height to facilitate the welding or joining procedure. By contrast, boss 152 may be integrally formed with inner wall 132, e.g., using additive manufacturing methods described herein and as illustrated in FIGS. 4 and 5.

Ferrule 144 includes a ferrule body 160 that extends along the axial direction A2 and defines a central bore 162 in fluid communication with combustion chamber 88. Central bore 162 is sized for securely receiving and supporting igniter 114 within or adjacent to combustor chamber 88. Notably, ferrule body 160 has an outer diameter that is smaller than internal diameter 150 of outer opening 142, such that ferrule 144 may move along the radial direction R2 relative to outer wall 134.

In addition, ferrule 144 includes a radial flange 164 that extends from ferrule body 160 along the radial direction R2. When installed as part of igniter mounting assembly 130, ferrule body 160 extends through outer opening 142 of outer wall 134 and radial flange 164 is positioned within gap 136 between inner wall 132 and outer wall 134. Radial flange 164 defines a flange diameter 166 that is greater than internal diameter 150 of outer opening 142 (and an internal diameter of inner opening 140), such that radial flange 164 is slidably received within gap 136 and ferrule 144 may move along the radial direction R2 relative to outer liner 82.

Ferrule 144 further defines a flared portion 168 that extends away from ferrule body 160 along the radial direction R2 and away from outer liner 82. Flared portion 168 is positioned at an opposite end of ferrule body 160 relative to radial flange 164. In this manner, flared portion 168 simplifies the assembly of combustor assembly 80 by allowing for easy insertion of igniter 114 into central bore 162 of ferrule body 160. In addition, according to the illustrated embodiment, flared portion 168 defines a flared diameter 170 that is less than internal diameter 150 of outer opening 142. In this manner, ferrule 144 may be easily inserted through outer opening 142 during assembly of igniter mounting assembly 130.

As best illustrated in FIGS. 4 and 5, igniter mounting assembly 130 further includes a stop ring 174 positioned around outer opening 142 of outer wall 134. Stop ring 174 may be integrally formed with outer wall 134, e.g., using additive manufacturing methods described herein and as illustrated in FIG. 4. By contrast, stop ring 174 could alternatively be a separate component attached to outer wall 134 during assembly of igniter mounting assembly 130, e.g., as illustrated in FIG. 5.

Stop ring 174 defines an annular surface 176 that extends along the axial direction A2 to support igniter 114 and provide a low friction interface that prevents excessive relative radial movement between outer liner 82 and igniter 114. As shown in FIG. 5, a gap height 180 is defined between a bottom surface 182 of stop ring 174 and a top surface 184 of boss 152 along the axial direction A2. According to the invention, gap height 180 is substantially equivalent to or greater than a flange height 186 of radial flange 164 (measured along the axial direction A2) such that movement of ferrule 144 along the axial direction A2 is restrained.

It should be appreciated that combustor assembly 80 is described herein only for the purpose of explaining aspects of the present subject matter. For example, combustor assembly 80 is used herein to describe exemplary configurations, constructions, and methods of manufacturing igniter mounting assembly 130. It should be appreciated that the additive manufacturing techniques discussed herein may be used to manufacture other combustor and igniter mounting assemblies for use in any suitable device, for any suitable purpose, and in any suitable industry. Thus, the exemplary components and methods described herein are used only to illustrate exemplary aspects of the present subject matter and are not intended to limit the scope of the present disclosure in any manner.

Now that the construction and configuration of combustor assembly 80 according to an exemplary embodiment of the present subject matter has been presented, an exemplary method 200 for manufacturing a combustor assembly according to an exemplary embodiment of the present subject matter is provided. Method 200 can be used by a manufacturer to form combustor assembly 80, or any other suitable combustor assembly. It should be appreciated that the exemplary method 200 is discussed herein only to describe exemplary aspects of the present subject matter, and is not intended to be limiting.

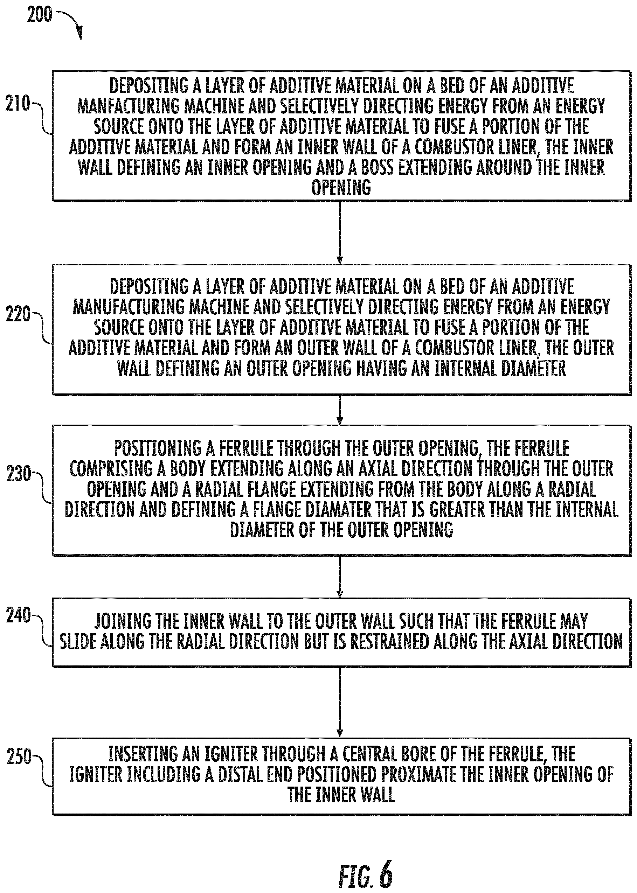

Referring now to FIG. 6, method 200 includes, at step 210, additively manufacturing an inner wall of a combustor liner, the inner wall defining an inner opening and a boss extending around the inner opening. Any suitable additive manufacturing technique, examples of which are described herein, may be used to form the inner wall according to step 210. For example, step 210 may include depositing a layer of additive material on a bed of an additive manufacturing machine and selectively directing energy from an energy source onto the layer of additive material to fuse a portion of the additive material and form the inner wall.

Method 200 further includes, at step 220, additively manufacturing an outer wall of a combustor liner, the outer wall defining an outer opening having an internal diameter. Any suitable additive manufacturing technique, examples of which are described herein, may be used to form the outer wall according to step 220. For example, step 220 may include depositing a layer of additive material on a bed of an additive manufacturing machine and selectively directing energy from an energy source onto the layer of additive material to fuse a portion of the additive material and form the outer wall.

Method 200 further includes, at step 230, positioning a ferrule through the outer opening. The ferrule includes a body that extends along an axial direction through the outer opening and a radial flange that extends from the body along a radial direction. The radial flange defines a flange diameter that is greater than the internal diameter of the outer opening. At step 240, method 200 includes joining the inner wall to the outer wall such that the ferrule may slide along the radial direction but is restrained along the axial direction. In this manner, the radial flange is positioned between the outer wall and the inner wall and slides along the boss defined by the inner wall.

Method 200 further includes, at step 250, inserting an igniter through a central bore of the ferrule. The igniter includes a distal end positioned proximate the inner opening of the inner wall. In this manner, the igniter may be used to ignite a fuel/air mixture within the combustion chamber. The ferrule is configured to receive the igniter in a substantially fluid tight manner such that air may not flow through inner and outer openings, while allowing relative movement between the igniter and the liner of the combustor assembly. Notably, according to an exemplary embodiment, the inner wall and boss are integrally formed as a single monolithic component and the outer wall and a stop ring may be integrally formed as a single monolithic component, as may other parts of the combustor assembly, such as described above.

FIG. 6 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of method 200 are explained using combustor assembly 80 as an example, it should be appreciated that these methods may be applied to manufacture any suitable combustor assembly.

A combustor assembly including additively manufactured parts and a method for manufacturing and assembling that combustor assembly are described above. Notably, the combustor assembly may generally include performance-enhancing geometries and structural features whose practical implementations are facilitated by an additive manufacturing process, as described herein. For example, the additively manufacturing techniques described herein enable the formation of an inner wall of a combustor liner having a boss, an outer wall of the combustor liner having a stop ring, and other features facilitating simplified manufacturing and assembly and improved performance. These features may be introduced during the design of the combustor assembly, such that they may be easily integrated into combustor assembly during the build process at little or no additional cost. Moreover, portions of the combustor assembly, including the inner wall and boss, the outer wall and stop ring, and other features can be formed integrally as a single monolithic component.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A combustor assembly (80) for a gas turbine engine (10), the combustor assembly (80) comprising:
a liner (82, 84) having an inner wall (132) and an outer wall (134) spaced apart from the inner wall (132) to define a gap (136) therebetween, the liner (82, 84) at least partially defining a combustion chamber (88);
an inner opening (140) defined by the inner wall (132);
an outer opening (142) defined by the outer wall (134), the outer opening (142) defining an internal diameter (150) and being substantially concentric with the inner opening (140);
a boss (152) defined by the inner wall (132) and extending around the inner opening (140) and into the gap (136);
a ferrule (144) defining an axial direction (A2) and a radial direction (R2) perpendicular to the axial direction (A2), the ferrule (144) comprising:
a body (160) extending along the axial direction (A2) through the outer opening (142) and defining a central bore (162) in fluid communication with the combustion chamber (88), wherein the body (160) has an outer diameter that is smaller than the internal diameter of the outer opening (142) such that the ferrule (144) can move along the radial direction (R2) relative to the outer wall (134); and
a radial flange (164) extending from the body (160) along the radial direction (R2), the radial flange (164) being positioned within the gap (136) and defining a flange diameter (166) that is greater than the internal diameter (150) of the outer opening (142),
wherein the combustor assembly (80) further comprises a stop ring (174) positioned around the outer opening (142) of the outer wall (134), and **characterized in that** the stop ring (174) defines an annular surface (176) extending along the axial direction (A2), and
wherein a gap height (180) is defined between a bottom surface (182) of the stop ring (174) and a top surface (184) of the boss (152) along the axial direction (A2), the gap height (180) being substantially equivalent to a height (186) of the radial flange (164) along the axial direction (A2) such that movement of the ferrule (144) along the axial direction (A2) is restrained.

2. The combustor assembly (80) of claim 1 wherein the outer wall (134) and the stop ring (174) are integrally formed as a single monolithic component.

3. The combustor assembly (80) of claim 1 or claim 2, wherein the ferrule (144) further defines a flared portion (168), the flared portion (168) extending away from the body (160) along the radial direction (R2) at an opposite end from the radial flange (164).

4. The combustor assembly (80) of any of claims 1 to 3, wherein the radial flange (164) is slidably received within the gap (136) such that the ferrule (144) may slide along the radial direction (R2).

5. The combustor assembly (80) of any of claims 1 to 4, wherein the liner (82, 84) is an outer liner (82, 84) of the combustor assembly (80).

6. The combustor assembly (80) of any of claims 1 to 5, further comprising:
an igniter (114) extending through the central bore (162) of the ferrule (144) and including a distal end (116) positioned proximate the inner opening (140) of the inner wall (132).

7. The combustor assembly (80) of any of claims 1 to 6, wherein the inner wall (132) comprises a plurality of layers formed by:
depositing a layer of additive material on a bed of an additive manufacturing machine; and
selectively directing energy from an energy source onto the layer of additive material to fuse a portion of the additive material.

8. The combustor assembly (80) of any of claims 1 to 7, wherein the combustor assembly (80) is suitable to be disposed between a compressor section (22, 24) and a turbine section (28, 30), the turbine section (28, 30) being mechanically coupled to the compressor section (22, 24) through a shaft (34, 36).

9. A method (200) of manufacturing a combustor assembly for a gas turbine engine, the method (200) comprising:
depositing a layer of additive material on a bed of an additive manufacturing machine and selectively directing energy from an energy source onto the layer of additive material to fuse a portion of the additive material and form an inner wall of a combustor liner, the inner wall defining an inner opening and a boss extending around the inner opening (210);
depositing a layer of additive material on a bed of an additive manufacturing machine and selectively directing energy from an energy source onto the layer of additive material to fuse a portion of the additive material and form an outer wall of a combustor liner, the outer wall defining an outer opening having an internal diameter (220);
positioning a ferrule through the outer opening, the ferrule comprising a body extending along an axial direction through the outer opening and a radial flange extending from the body along a radial direction and defining a flange diameter that is greater than the internal diameter of the outer opening (230), wherein the body has an outer diameter that is smaller than the internal diameter of the outer opening such that the ferrule can move along the radial direction relative to the outer wall; and
joining the inner wall to the outer wall such that the ferrule may slide along the radial direction but is restrained along the axial direction (240),
wherein the combustor assembly further comprises a stop ring positioned around the outer opening of the outer wall, the stop ring defining an annular surface extending along the axial direction, and
wherein a gap height is defined between a bottom surface of the stop ring and a top surface of the boss along the axial direction, the gap height being substantially equivalent to a height of the radial flange along the axial direction such that movement of the ferrule along the axial direction is restrained.

10. The method (200) of claim 9, wherein the body of the ferrule defines a central bore in fluid communication with a combustion chamber, the method (200) further comprising:
inserting an igniter through the central bore of the ferrule, the igniter including a distal end positioned proximate the inner opening of the inner wall (250).

## Patentansprüche

1. Brennkammeranordnung (80) für ein Gasturbinentriebwerk (10), die Brennkammeranordnung (80) umfassend:
eine Auskleidung (82, 84), die eine Innenwand (132) und eine Außenwand (134), die von der Innenwand (132) beabstandet ist, aufweist, um einen Spalt (136) dazwischen zu definieren, wobei die Auskleidung (82, 84) mindestens teilweise einen Brennraum (88) definiert;
eine Innenöffnung (140), die durch die Innenwand (132) definiert ist;
eine Außenöffnung (142), die durch die Außenwand (134) definiert ist, wobei die Außenöffnung (142) einen Innendurchmesser (150) definiert und im Wesentlichen konzentrisch mit der Innenöffnung (140) ist;
einen Vorsprung (152), der durch die Innenwand (132) definiert ist und sich um die Innenöffnung (140) herum und in den Spalt (136) hinein erstreckt;
eine Zwinge (144), die eine axiale Richtung (A2) und eine radiale Richtung (R2) senkrecht zu der axialen Richtung (A2) definiert, die Zwinge (144) umfassend:
einen Körper (160), der sich entlang der axialen Richtung (A2) durch die Außenöffnung (142) erstreckt und eine zentrale Bohrung (162) in Fluidverbindung mit dem Brennraum (88) definiert, wobei der Körper (160) einen Außendurchmesser aufweist, der kleiner ist als der Innendurchmesser der Außenöffnung (142), derart, dass sich die Zwinge (144) entlang der radialen Richtung (R2) relativ zu der Außenwand (134) bewegen kann; und
einen radialen Flansch (164), der sich von dem Körper (160) entlang der radialen Richtung (R2) erstreckt, wobei der radiale Flansch (164) innerhalb des Spalts (136) positioniert ist und einen Flanschdurchmesser (166) definiert, der größer ist als der Innendurchmesser (150) der Außenöffnung (142),
wobei die Brennkammeranordnung (80) ferner einen Anschlagring (174) umfasst, der um die Außenöffnung (142) der Außenwand (134) herum positioniert ist, und **dadurch gekennzeichnet, dass** der Anschlagring (174) eine ringförmige Oberfläche (176) definiert, die sich entlang der axialen Richtung (A2) erstreckt, und
wobei eine Spalthöhe (180) zwischen einer unteren Oberfläche (182) des Anschlagrings (174) und einer oberen Oberfläche (184) des Vorsprungs (152) entlang der axialen Richtung (A2) definiert ist, wobei die Spalthöhe (180) im Wesentlichen einer Höhe (186) des radialen Flansches (164) entlang der axialen Richtung (A2) derart entspricht, dass eine Bewegung der Zwinge (144) entlang der axialen Richtung (A2) zurückgehalten wird.

2. Brennkammeranordnung (80) nach Anspruch 1, wobei die Außenwand (134) und der Anschlagring (174) als eine einzige monolithische Komponente einstückig ausgebildet sind.

3. Brennkammeranordnung (80) nach Anspruch 1 oder 2, wobei die Zwinge (144) ferner einen aufgeweiteten Teil (168) definiert, wobei sich der aufgeweitete Teil (168) an einem dem radialen Flansch (164) gegenüberliegenden Ende entlang der radialen Richtung (R2) von dem Körper (160) weg erstreckt.

4. Brennkammeranordnung (80) nach einem der Ansprüche 1 bis 3, wobei der radiale Flansch (164) innerhalb des Spalts (136) derart verschiebbar aufgenommen ist, dass die Zwinge (144) entlang der radialen Richtung (R2) verschoben werden kann.

5. Brennkammeranordnung (80) nach einem der Ansprüche 1 bis 4, wobei die Auskleidung (82, 84) eine Außenauskleidung (82, 84) der Brennkammeranordnung (80) ist.

6. Brennkammeranordnung (80) nach einem der Ansprüche 1 bis 5, ferner umfassend:
einen Zünder (114), der sich durch die zentrale Bohrung (162) der Zwinge (144) erstreckt und ein distales Ende (116) einschließt, das in der Nähe der Innenöffnung (140) der Innenwand (132) positioniert ist.

7. Brennkammeranordnung (80) nach einem der Ansprüche 1 bis 6, wobei die Innenwand (132) eine Vielzahl von Schichten umfasst, die ausgebildet sind durch:
Abscheiden einer Schicht aus additivem Material auf einem Bett einer Maschine für eine additive Herstellung; und
selektives Richten von Energie aus einer Energiequelle auf die Schicht aus additivem Material, um einen Teil des additiven Materials zu verschmelzen.

8. Brennkammeranordnung (80) nach einem der Ansprüche 1 bis 7, wobei die Brennkammeranordnung (80) dazu geeignet ist, zwischen einem Verdichterabschnitt (22, 24) und einem Turbinenabschnitt (28, 30) eingerichtet zu werden, wobei der Turbinenabschnitt (28, 30) durch eine Welle (34, 36) mit dem Verdichterabschnitt (22, 24) mechanisch gekoppelt ist.

9. Verfahren (200) zum Herstellen einer Brennkammeranordnung für ein Gasturbinentriebwerk, das Verfahren (200) umfassend:
Abscheiden einer Schicht aus additivem Material auf einem Bett einer Maschine für die additive Herstellung und selektives Richten von Energie aus einer Energiequelle auf die Schicht aus additivem Material, um einen Teil des additiven Materials zu verschmelzen und eine Innenwand einer Brennkammerauskleidung auszubilden, wobei die Innenwand eine Innenöffnung und einen Vorsprung, der sich um die Innenöffnung (210) herum erstreckt, definiert;
Abscheiden einer Schicht aus additivem Material auf einem Bett einer Maschine für die additive Herstellung und selektives Richten von Energie aus einer Energiequelle auf die Schicht aus additivem Material, um einen Teil des additiven Materials zu verschmelzen und eine Außenwand einer Brennkammerauskleidung auszubilden, wobei die Außenwand eine Außenöffnung, die einen Innendurchmesser (220) aufweist, definiert;
Positionieren einer Zwinge durch die Außenöffnung, die Zwinge umfassend einen Körper, der sich entlang einer axialen Richtung durch die Außenöffnung erstreckt, und einen radialen Flansch, der sich von dem Körper entlang einer radialen Richtung erstreckt und einen Flanschdurchmesser definiert, der größer ist als der Innendurchmesser der Außenöffnung (230), wobei der Körper einen Außendurchmesser aufweist, der kleiner ist als der Innendurchmesser der Außenöffnung, derart, dass sich die Zwinge entlang der radialen Richtung relativ zu der Außenwand bewegen kann; und
Verbinden der Innenwand mit der Außenwand, derart, dass die Zwinge entlang der radialen Richtung verschoben werden kann, aber entlang der axialen Richtung (240) zurückgehalten wird,
wobei die Brennkammeranordnung ferner einen Anschlagring umfasst, der um die Außenöffnung der Außenwand herum positioniert ist, wobei der Anschlagring eine ringförmige Oberfläche definiert, die sich entlang der axialen Richtung erstreckt, und
wobei eine Spalthöhe zwischen einer unteren Oberfläche des Anschlagrings und einer oberen Oberfläche des Vorsprungs entlang der axialen Richtung definiert ist, wobei die Spalthöhe im Wesentlichen einer Höhe des radialen Flansches entlang der axialen Richtung derart entspricht, dass eine Bewegung der Zwinge entlang der axialen Richtung zurückgehalten wird.

10. Verfahren (200) nach Anspruch 9, wobei der Körper der Zwinge eine zentrale Bohrung in Fluidverbindung mit einem Brennraum definiert, das Verfahren (200) ferner umfassend:
Einführen eines Zünders durch die zentrale Bohrung der Zwinge, wobei der Zünder ein distales Ende einschließt, das in der Nähe der Innenöffnung der Innenwand (250) positioniert ist.

## Revendications

1. Ensemble dispositif de combustion (80) pour un moteur de turbine à gaz (10), l'ensemble dispositif de combustion (80) comprenant :
une chemise (82, 84) ayant une paroi intérieure (132) et une paroi extérieure (134) espacée de la paroi intérieure (132) pour définir un espace (136) entre elles, la chemise (82, 84) définissant au moins partiellement une chambre de combustion (88) ;
une ouverture intérieure (140) définie par la paroi intérieure (132) ;
une ouverture extérieure (142) définie par la paroi extérieure (134), l'ouverture extérieure (142) définissant un diamètre interne (150) et étant sensiblement concentrique avec l'ouverture intérieure (140) ;
un bossage (152) défini par la paroi intérieure (132) et s'étendant autour de l'ouverture intérieure (140) et dans l'espace (136) ;
une virole (144) définissant une direction axiale (A2) et une direction radiale (R2) perpendiculaire à la direction axiale (A2), la virole (144) comprenant :
un corps (160) s'étendant le long de la direction axiale (A2) à travers l'ouverture extérieure (142) et définissant un alésage central (162) en communication fluidique avec la chambre de combustion (88), dans lequel le corps (160) a un diamètre extérieur inférieur au diamètre interne de l'ouverture extérieure (142) de telle sorte que la virole (144) peut se déplacer le long de la direction radiale (R2) par rapport à la paroi extérieure (134) ; et
une bride radiale (164) s'étendant à partir du corps (160) le long de la direction radiale (R2), la bride radiale (164) étant positionnée à l'intérieur de l'espace (136) et définissant un diamètre de bride (166) supérieur au diamètre interne (150) de l'ouverture extérieure (142),
dans lequel l'ensemble dispositif de combustion (80) comprend en outre un anneau de butée (174) positionné autour de l'ouverture extérieure (142) de la paroi extérieure (134), et **caractérisé en ce que** l'anneau de butée (174) définit une surface annulaire (176) s'étendant le long de la direction axiale (A2), et
dans lequel une hauteur d'espace (180) est définie entre une surface inférieure (182) de l'anneau de butée (174) et une surface supérieure (184) du bossage (152) le long de la direction axiale (A2), la hauteur d'espace (180) étant sensiblement équivalente à une hauteur (186) de la bride radiale (164) le long de la direction axiale (A2) de telle sorte que le mouvement de la virole (144) le long de la direction axiale (A2) est limité.

2. Ensemble dispositif de combustion (80) selon la revendication 1, dans lequel la paroi extérieure (134) et l'anneau de butée (174) sont formés d'un seul tenant en tant que composant monolithique unique.

3. Ensemble dispositif de combustion (80) selon la revendication 1 ou la revendication 2, dans lequel la virole (144) définit en outre une partie évasée (168), la partie évasée (168) s'étendant à l'écart du corps (160) le long de la direction radiale (R2) au niveau d'une extrémité opposée à la bride radiale (164).

4. Ensemble dispositif de combustion (80) selon l'une quelconque des revendications 1 à 3, dans lequel la bride radiale (164) est reçue de manière coulissante à l'intérieur de l'espace (136) de telle sorte que la virole (144) peut coulisser le long de la direction radiale (R2).

5. Ensemble dispositif de combustion (80) selon la revendication 1, dans lequel la chemise (82, 84) est une chemise externe (82, 84) de l'ensemble dispositif de combustion (80).

6. Ensemble dispositif de combustion (80) selon l'une quelconque des revendications 1 à 5, comprenant en outre :
un allumeur (114) s'étendant à travers l'alésage central (162) de la virole (144) et comportant une extrémité distale (116) positionnée à proximité de l'ouverture intérieure (140) de la paroi intérieure (132).

7. Ensemble dispositif de combustion (80) selon l'une quelconque des revendications 1 à 6, dans lequel la paroi intérieure (132) comprend une pluralité de couches formées par :
le dépôt d'une couche de matériau additif sur un lit d'une machine de fabrication additive ; et
l'orientation sélective de l'énergie d'une source d'énergie sur la couche de matériau additif pour fusionner une partie du matériau additif.

8. Ensemble dispositif de combustion (80) selon l'une quelconque des revendications 1 à 7, dans lequel l'ensemble dispositif de combustion (80) peut être disposé entre une section de compresseur (22, 24) et une section de turbine (28, 30), la section de turbine (28, 30) étant accouplée mécaniquement à la section de compresseur (22, 24) par le biais d'un arbre (34, 36).

9. Procédé (200) de fabrication d'un ensemble de dispositif de combustion pour un moteur à turbine à gaz, le procédé (200) comprenant :
le dépôt d'une couche de matériau additif sur un lit d'une machine de fabrication additive et l'orientation sélective de l'énergie d'une source d'énergie sur la couche de matériau additif pour fusionner une partie du matériau additif et former une paroi intérieure d'une chemise de dispositif de combustion, la paroi intérieure définissant une ouverture intérieure et un bossage s'étendant autour de l'ouverture intérieure (210) ;
le dépôt d'une couche de matériau additif sur un lit d'une machine de fabrication additive et l'orientation sélective de l'énergie d'une source d'énergie sur la couche de matériau additif pour fusionner une partie du matériau additif et former une paroi extérieure d'une chemise de dispositif de combustion, la paroi extérieure définissant une ouverture extérieure ayant un diamètre interne (220) ;
le positionnement d'une virole à travers l'ouverture extérieure, la virole comprenant un corps s'étendant le long d'une direction axiale à travers l'ouverture extérieure et une bride radiale s'étendant à partir du corps le long d'une direction radiale et définissant un diamètre de bride supérieur au diamètre interne de l'ouverture extérieure (230), le corps ayant un diamètre extérieur inférieur au diamètre interne de l'ouverture extérieure de telle sorte que la virole peut se déplacer le long de la direction radiale par rapport à la paroi extérieure ; et
la liaison de la paroi intérieure à la paroi extérieure de telle sorte que la virole peut coulisser le long de la direction radiale mais est retenue le long de la direction axiale (240),
dans lequel l'ensemble dispositif de combustion comprend en outre un anneau de butée positionné autour de l'ouverture extérieure de la paroi extérieure, l'anneau de butée définissant une surface annulaire s'étendant le long de la direction axiale, et
dans lequel une hauteur d'espace est définie entre une surface inférieure de l'anneau de butée et une surface supérieure du bossage le long de la direction axiale, la hauteur d'espace étant sensiblement équivalente à une hauteur de la bride radiale le long de la direction axiale de telle sorte que le mouvement de la virole le long de la direction axiale est limité.

10. Procédé (200) selon la revendication 9, dans lequel le corps de la virole définit un alésage central en communication fluide avec une chambre de combustion, le procédé (200) comprenant en outre :
l'insertion d'un allumeur à travers l'alésage central de la virole, l'allumeur comportant une extrémité distale positionnée à proximité de l'ouverture intérieure de la paroi intérieure (250).
